Europäisches Patentamt

European Patent Office

Office européen des brevets

(19)

(11) Veröffentlichungsnummer: **0 012 373**
**B1**

(12) **EUROPÄISCHE PATENTSCHRIFT**

(45) Veröffentlichungstag der Patentschrift: **15.12.82**

(21) Anmeldenummer: **79104963.8**

(22) Anmeldetag: **06.12.79**

(51) Int. Cl.³: **B 65 D 85/08,** B 65 B 51/00
//A22C13/00

(54) Funktionelle Einheit, bestehend aus einer Stützhülle und einem Hohlstab und Verfahren zu ihrer Herstellung.

(30) Priorität: **11.12.78 DE 2853401**

(43) Veröffentlichungstag der Anmeldung:
**25.06.80 Patentblatt 80/13**

(45) Bekanntmachung des Hinweises auf die Patenterteilung:
**15.12.82 Patentblatt 82/50**

(84) Benannte Vertragsstaaten:
**BE DE FR**

(56) Entgegenhaltungen:
**DE - A - 2 733 996**
**FR - A - 2 291 015**
**FR - A - 2 397 791**
**US - A - 2 105 368**
**US - A - 3 051 368**

(73) Patentinhaber: **HOECHST AKTIENGESELLSCHAFT**
**Postfach 80 03 20**
**D-6230 Frankfurt/Main 80 (DE)**

(72) Erfinder: **Michel, Wolfgang**
**Am Hohen Stein 24**
**D-6200 Wiesbaden (DE)**
Erfinder: **Becker, Reinhold, Dr.**
**Am Hohen Stein 18**
**D-6200 Wiesbaden (DE)**

Funktionelle Einheit, bestehend aus einer Stützhülle und einem
Hohlstab, und Verfahren zu ihrer Herstellung

Die Erfindung betrifft eine funktionelle Einheit von der im Oberbegriff des Anspruchs 1 genannten Art und ein Verfahren zu ihrer Herstellung, das von einem Verfahren ausgeht, wie es im Oberbegriff des Anspruchs 9 angegeben wird.

Unter Hohlstab ist ein aus längsweise gerafftem Schlauch bestehender hohlzylinderförmige Körper zu verstehen. Als Stützhülle wird die aus formbarer Folie bestehende Umhüllung des Hohlstabes bezeichnet, sie weist die Gestalt eines hohlzylinderförmigen Behälters auf, dessen Hohlraum jeweils endseitig durch baulich eigenartig ausgestaltete integrale Stirnwände begrenzt ist.

Hohlstäbe dieser Art, insbesondere aus Cellulosehydrat, bevorzugt mit Faserverstärkung, werden insbesondere bei der Wurstherstellung verwendet. An einem Ende verschlossene Hohlstäbe werden dabei auf das Füllrohr einer Maschine zum Abfüllen von Wurstmasse geschoben; durch Auspressen von Wurstmasse durch das Füllrohr in den Hohlraum des an einem Ende mit einem Endverschluß versehenen Hohlstabs wird der Hohlstab unter stetiger Entfältelung und entsprechender Verkürzung mit Wurstmasse gefüllt.

Vor dem Abfüllen von Wurstmasse werden die Hohstäbe üblicherweise gewässert. Wasserfeuchte Hohlstäbe haben jedoch die Neigung, sich in längsaxialer Richtung erheblich auszudehnen, wobei ihre Formbeständigkeit nicht mehr in erwünschtem Maße gegeben ist, was zu Schwierigkeiten bei ihrer Handhabung führt.

In der DE—A 25 10 637 ist ein mit einer Stützhülle ummantelter Hohlstab aus längsweise geraffter Schlauchhülle beschrieben. Die Stützhülle ist zweiteilig aus einer Schlauchhülle und formfesten Ringelementen zur Fixierung der Schlauchhülle, jeweils als Abschluß der Stützhülle, aufgebaut. Diese Stützhülle hat jedoch den Nachteil, daß ihre Umstülpungen relativ lang sein müssen, um, insbesondere im wasserfeuchtem Zustand, die Möglichkeit unerwünschter Lockerung der Stützhülle zu vermeiden.

Der Erfindung liegt deshalb die Aufgabe zugrunde, eine einheitlich handhabbare funktionelle Einheit aus einem Hohlstab und diesen umgebender Stützhülle vorzuschlagen, bei deren bestimmungsgemäßer Verwendung ein Endabschnitt des den Hohlstab bildenden gerafften Schlauchs einfach erfaßbar und unter Entfältelung aus der Stützhülle herausziehbar ist, ohne daß dabei die Gefahr der Beschädigung des Schlauchs besteht.

Die der Erfindung zugrundeliegende Aufgabe wird durch eine einheitlich handhabbare funktionelle Einheit mit den im Anspruch 1 genannten Merkmalen sowie durch das im Anspruch 9 angegebene Verfahren gelöst. Die Unteransprüche geben weitere Ausbildungen der funktionellen Einheit und des Verfahrens an.

Die in der Beschreibung und in den Ansprüchen verwendeten Ausdrücke "permanent formbeständig", "formpermanent", sowie "permanent formfixiert" sind bedeutungsgleich. Sie sollen jeweils zum Ausdruck bringen, daß die derart bezeichneten Elemente der Stützhülle eine Gestalt bzw. Form aufweisen, die sich nicht von selbst zu ändern vermag.

Die behälterartige Stützhülle bewirkt die Formfixierung des in ihrem Hohlraum angeordneten Hohlstabs, in dem sie durch die Funktion der Stirnwände dessen unerwünschte Längsausdehnung und Formänderung — insbesondere nach Wässerung des Hohlstabs in der Stützhülle — verhindert.

Der Mantel der Stützhülle bzw. des Hüllenstücks, aus dem die Stützhülle herstellbar ist, weist einen im Querschnitt kreisförmigen Hohlraum auf, dessen Durchmesser dem Außendurchmesser des Hohlstabs angepaßt ist.

Die Stützhülle bzw. das Hüllenstück besteht aus formbarer Folie. Die Bezeichnung "formbare Folie" soll definitionsgemäß flexible Folien aus thermoplastischem verschweißbarem Polymerisat — insbesondere Polyvinylchlorid, bevorzugt jedoch Polyethylen — als auch hinreichend dünner Metallfolie, insbesondere Aluminiumfolie, umfassen. Stützhüllen aus synthetischem, thermoplastischem Polymerisat sind besonders bevorzugt. Der Begriff "formbare Folie" umfaßt definitionsgemäß auch netzartig ausgebildete Schläuche, beispielsweise Netzschläuche auf Polyethylenbasis.

Die behälterartige Stützhülle ist einstückig und unfaßt einen geraden hohlzylinderförmigen Mantel, dessen Hohlraum jeweils endseitig durch mit der Stützhülle integrale, baulichstrukturell eigenartig sowie funktionswesentlich ausgebildete Stirnwände mit zentralen Öffnungen und jeweils wenigstens zwei Folienfalten begrenzt ist.

Die Stirnwände sind jeweils bevorzugt von gleicher raumförmlicher Ausbildung und vorteilhaft jeweils gleich dimensioniert.

Die Stirnwände besitzen bevorzugt jeweils wenigstens drei, insbesondere bevorzugt vier formpermanente Folienfalten.

Definitionsgemäß soll als permanent formbeständige Folienfalte der Stirnwand eine solche gelten, die bei Verformung ihrer Gestalt durch bei Raumtemperatur auf sie einwirkende Kraft nach Aufhebung derselben ihre ursprüngliche Gestalt von selbst wieder anzunehmen bestrebt ist. Die formpermanenten Folienfalten sind bevorzugt von gleicher Gestalt und gleich dimensioniert.

Die durch die Faltenbildung entstehenden Stirnwandkanten einer Stirnwand sind bevorzugt symmetrisch zueinander sowie symmetrisch zur Stützhüllenlängsachse angeordnet; sie verlaufen dabei in der Weise, daß durch die Stützhüllenlängsachse und eine einer Stirnwandkante entprechende Linie eine gemeinsame Ebene legbar ist; sofern die Stirnwände jeweils nur zwei Stirnwandkanten aufweisen, verlaufen diese in einer gemeinsamen Ebene, in der sich auch die Stützhüllenlängsachse erstreckt.

Die Sternwandteilflächen haben bevorzugt trapezartige Form und sind bevorzugt konkav in Richtung auf die Stützhüllenlängsachse zu gekrümmt. Die Stirnwandteilflächen verengen sich in Richtung auf die Stirnwandmitte zu. Diese Form der Stirnwandteilflächen wird als pyramidenstumpfartig bezeichnet.

Die Stirnwände weisen jeweils eine zentrale Öffnung auf, deren Begrenzungsrand durch die freien Ränder der Stirnwandteilflächen umgrenzt werden. Die jeweils einem Paar seitlich aneinander grenzender Stirnwandteilflächen zugehörenden Stirnwandkanten laufen im Mündungsrand der zentralen Öffnung aus.

Die Stirnwandkanten können als permanent formfixierte Folienkanten oder als Schweißnahtkanten ausgebildet sein.

Der Begriff "Schweißnahtkanten" umfaßt auch solche Schweißnähte, an die sich — nach außen gerichtet — jeweils dreieckige, doppellagige einseitig offene Folienfahnen mit Faltkante, bei denen die Faltkante mit der Schweißnacht einen Winkel bildet, anschließen.

Gemäß einer bevorzugten Ausbildung der gegenständlichen Erfindung sind dabei die Folienfahnen durch Umklappen um die Schweißnaht als Klappachse jeweils auf die Stirnwände umgelegt und mit diesen — beispielsweise durch Verschweißung — fest verbunden.

Die zentralen Öffnungen der Stirnwände sind in Gestalt und Abmessung bevorzugt gleich dimensioniert ausgebildet und zwar in der Weise, daß bei Verwendung der funktionellen Einheit durch die zentrale Öffnung in der Stirnwand das Füllrohr einer Abfüllmaschine für Füllgut leicht in den Hohlstabhohlraum einführbar ist. Zugleich ist die Stirnwand derart ausgebildet, daß sie die Fixierung des Hohlstabs im Stützhüllenhohlraum gewährleistet.

Die zentralen Öffnungen der Stirnwände sind derart zueinander angeordnet, daß ihre Mittelpunkte auf einer Geraden liegen, deren Verlauf der Hohlstablängsachse entspricht.

Aufgrund der angegebenen raumförmlich baulichen Ausbildung der Stirnwände wird zur Beschreibung ihrer Gestalt der Ausdruck "pyramidenstumpfartig" verwendet; diese Bezeichnung soll auch für Stirnwandausbildungen gelten, bei denen die den Stirnwandkanten entsprechenden Linien nur sehr geringfügig von der Stirnwandbasis in Richtung auf die Stirnwandöffnung zu ansteigen.

Die Innenseite des Stützhüllenmantels grenzt entweder unmittelbar an die Hohlstabaußenseite an oder verläuft dazu in geringem Abstand.

Die Länge des Stützhüllenmantels entspricht wenigstens der Hohlstablänge; sofern eine bestimmte Längsausdehnung des wasserfeuchten Hohlstabs aus Cellulosehydratschlauch — als Ergebnis der Wässerung der funktionellen Einheit vor ihrer Verwendung — erwünscht ist, kann die Länge des Stützhüllenmantels dementsprechend angepaßt werden. Der Mantel der Stützhülle weist bevorzugt eine Vielzahl von Durchbrüchen auf, die vorteilhaft von gleicher Gestalt und gleicher Abmessung sind. Es ist besonders zweckmäßig, wenn die Durchbrüche gleichmäßig über die gesamte Länge und den Umfang des Stützhüllenmantels verteilt vorgesehen sind. Die Durchbrüche erlauben eine schnellere Durchtränkung des Hohlstabs im Stützhüllenhohlraum mit Bewässerungsflüssigkeit bei der bestimmungsgemäßen Verwendung der funktionellen Einheit. Die Anzahl, Form und Abmessung der Durchbrüche im Stützhüllenmantel sind derart zu wählen, daß die form- und lagefixierende Funktion dadurch nicht gemindert wird.

Die Wanddicke der Stützhülle ist nicht wesentlich, sofern durch sie die angestrebte Eigenschaft der Stützhülle sowie ihre Schutzfunktion nicht nachteilig beeinflußt wird. Sofern die Stützhülle in bevorzugter Ausführungsform aus Polyethylenfolie besteht, hat diese vorteilhaft eine Dicke im Bereich zwischen 100 bis 250 $\mu$m.

Nachfolgend wird beispielhaft ein Verfahren beschrieben, nach dem die erfindungsgemäße funktionelle Einheit herstellbar ist.

Im Hohlraum eines Hohlstabs aus längsweise gerafftem Schlauch, beispielsweise eines solchen auf Basis von faserverstärktem Cellulosehydrat, wird ein gerader formfester Dorn als Stützelement angeordnet, dessen Länge derart bemessen ist, daß er aus dem Hohlstabhohlraum beidseitig hinreichend weit herausragt. Um den Hohlstab wird dann eine hohlzylindrische Hülle aus formbarer Folie angeordnet — beispielsweise eine aus Polyethylen —, deren Länge derart bemessen ist, daß ihre Endabschnitte jeweils hinreichend weit über die Hohlstabenden hinausragen, wobei diese Hüllenüberstände jeweils bevorzugt gleich lang sind und der Hülleninnendurchmesser dem Hohlstabaußendurchmesser angepaßt ist.

Die Hüllenüberstände werden radial in Richtung auf die Hüllenlängsachse teilweise eingewölbt. Hierbei läßt man mit einem entsprechend ausgebildeten Stempelement entlang vier gerader längsaxial parallel abständig und symmetrisch zueinander andeordneter Bereiche am Umfang der Hüllenüberstände Preßkraft einwirken. Es werden vier Falten derart ausgebildet, daß deren nach außen weisende Faltkanten symmetrisch zur Hüllenlängsachse und bevorzugt symmetrisch zueinander verlaufen und durch die Hüllenlängsachse und jeweils eine Faltkante eine gemeinsame Ebene legbar ist.

Beim Einformen der Falten in die Hüllenüberstände können deren Innenseiten partiell entlang gerader längsaxialer Linien unterstützt werden — beispielsweise durch stiftartige Stützelemente —, wobei der Verlauf der Linien dem Verlauf der zu bildenden Faltkanten entspricht. Vorteilhaft erfolgt die genannte Unterstützung entlang vier symmetrisch zueinander verlaufender Linien.

Nach erfolgter Ausbildung der Falten werden die partiellen linearen Unterstützungen der Schlauchhüllenüberstände aufgegeben, beispielsweise indem man die stiftartigen Stützelemente jeweils aus dem Hohlraum der Hüllenüberstände herauszieht.

Die gebildeten Folienfalten werden dann in formpermanenten Zustand übergeführt; dies kann bei der Verwendung von Schlauchhüllen aus Polyäthylen beispielsweise dadurch erfolgen, daß man zunächst die Möglichkeit der Formänderung der Falte durch von außen auf diese wirkende mechanische Mittel verhindert, die die Falten bildenden Folienbereiche durch Beaufschlagung mit Wärme hinreichender Temperatur in den thermoplastischen Zustand überführt, die Falte dann auf Raumtemperatur abkühlt und die zwangsweisen Formfixiermaßnahmen aufhebt. Eine andere bevorzugte Möglichkeit der Ausbildung einer formfesten Kante besteht darin, die Folienkanten der Falte ganzflächig oder nur entlang einer geraden Schweißnaht, die gegebenenfalls die Faltkante mitumfaßt — durch Verschweißung unter Ausbildung einer formpermanenten Kante, fest zu verbinden.

Das Einformen von Falten in die Hüllenüberstände sowie die anschließende formpermanente Fixierung derselben kann beispielsweise mittels eines entsprechend ausgebildeten zangenartigen Prägewerkzeugs erfolgen, wobei zwangsmäßig die Einformung der Falten gleichzeitig vorgenommen wird.

Bei bevorzugter Verwendung von flexiblen Schlauchhüllen aus thermoplastischem Kunststoff, insbesondere aus Polyethylen zur Herstellung der Stützhülle, ist es zur Ausbildung formpermanenter Falten erforderlich, daß nach deren Bildung die ihnen jeweils zugeordneten Flanken fest miteinander verbunden werden. Dies kann beispielsweise dadurch erfolgen, daß das zur Ausbildung der Falten benutzte Formwerkzeug heizbar ausgebildet ist und man nach Formung der Falten ihre zugehörigen Flanken mittels des beheizten Werkzeugs verschweißt.

Sofern bei der Herstellung der Stützhülle ein Stützdorn im Hohlraum des Hohlstabs verwendet wird, wirkt dieser als Gegenlager gegen die die Faltenbildung bewirkende Preßkraft.

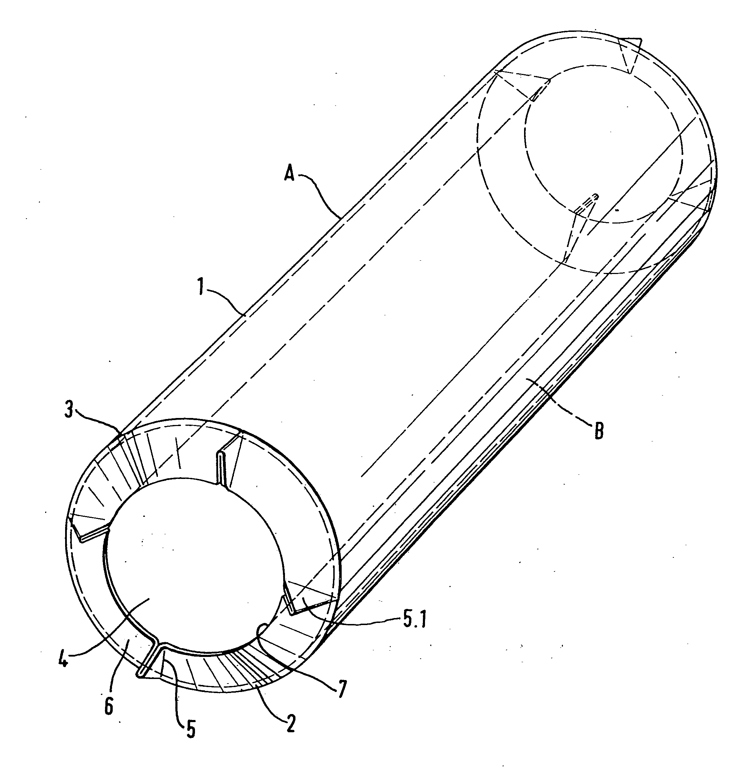

Die Erfindung wird durch die Zeichnung erläutert, in der einzigen Figur wird eine perspecktivische Darstellung des Gegenstandes der Erfindung in seitlicher Ansicht gezeigt.

A bedeutet dabei die Stützhülle und B ein Hohlstab im Hohlraum der Stützhülle A. Die Stützhülle A besteht aus einem hohlzylinderförmigen Mantel 1 und einer integralen Stirnwand 2 in formpermanent pyramidenstumpfartiger Ausbildung. 3 ist der Übergangsbereich vom hohlzylinderförmigen Mantel 1 zur Stirnwand 2, es ist 4 eine zentrale Öffnung in der Stirnwand 2 und 5 eine als Schweißnaht ausgebildete Stirnwandkante, 6 ist eine Stirnwandteilfläche, die jeweils seitlich durch Stirnwandkanten 5 begrenzt ist, 7 ist der freioffene Rand einer Stirnwandseitenfläche.

5.1 bedeutet eine besondere Ausbildung der Schweißnahtkante als doppellagige, dreieckige, einseitig offene Folienfahne mit Faltkante, die durch Umklappen um die Kante 5 als Klappachse auf die Stirnwandteilfläche 6 gelegt und mit dieser durch Verschweißung befestigt ist.

## Patentansprüche

1. Funktionelle Einheit, bestehend aus einer einstückigen hohlzylinderförmigen Stützhülle (A) aus formbarer Folie mit Stirnwänden (2) und zentraler Öffnung (4) in den Stirnwänden (2) und einem Hohlstab (B) aus einem längsweise gerafftem Schlauch im Stützhüllenhohlraum, wobei die Stützhülle (A) den Hohlstab (B) unter Freilassung seiner Hohlraummündungsöffnung umgibt, dadurch gekennzeichnet, daß die Stirnwände (2) unter Ausbildung von formpermanenten Folienfalten pyramidenstumpfartig derart ausgebildet sind, daß die bei der Faltenbildung entstehenden Stirnwandkanten (5) in Richtung auf den Stirnwandmittelpunkt verlaufen.

2. Funktionelle Einheit nach Anspruch 1, dadurch gekennzeichnet, daß ihre Stirnwände (2) jeweils vier symmetrisch zueinander angeordnete formpermanente Stirnwandkanten (5) aufweisen.

3. Funktionelle Einheit nach Anspruch 1 oder 2, dadurch gekennzeichnet, daß die Stützhülle (A) aus Polyethylen besteht.

4. Funktionelle Einheit nach einem der Ansprüche 1 bis 3, dadurch gekennzeichnet, daß die den Folienfalten jeweils zugehörenden Flanken miteinander verschweißt sind.

5. Funktionelle Einheit nach Anspruch 4, dadurch gekennzeichnet, daß die Flanken der Folienfalten ganzflächig miteinander verschweißt sind.

6. Funktionelle Einheit nach Anspruch 4, dadurch gekennzeichnet, daß die Flanken der Folienfalten im Bereich nahe den Stirnwandkanten (5) entlang einer geraden Linie unter Einschluß der Stirnwandkanten (5) miteinander verschweißt sind.

7. Funktionelle Einheit nach Anspruch 5, dadurch gekennzeichnet, daß die Flanken der Folienfalten entlang einer geraden Schweißnaht miteinander verbunden sind, an die sich nach außen gerichtet eine dreieckige, doppellagige, einseitig offene Folienfahne (5.1) mit Faltkante (5) die einen Winkel mit der Schweißnaht bildet, anschließt.

8. Funktionelle Einheit nach Anspruch 7, dadurch gekennzeichnet, daß die sich an die als Schweißnaht ausgebildete Faltkante (5) anschließende Folienfahne (5.1) unter Umklappen um die Schweißnaht als Klappachse auf eine Stirnwandteilfläche (6) umgelegt und mit dieser verschweißt ist.

9. Verfahren zur Herstellung der funktionellen Einheit nach einem der Ansprüche 1 bis 8, bei dem man um einen Hohlstab (B) aus längsweise gerafftem Schlauch eine zylindrische Hülle (A) aus formbarer Folie anordnet, wobei die Hülle in ihrer Länge derart bemessen ist, daß sie beidseitig über die Hohlstabenden hinausragt, und die Hüllenüberstände in Stirnwände mit zentraler Öffnung überführt, dadurch gekennzeichnet, daß man in die Hüllenüberstände wenigstens zwei Folienfalten mit jeweils nach außen weisender Stirnwandkante (5) einformt und diese dann in permanent formbeständigen Zustand überführt.

10. Verfahren nach Anspruch 9, dadurch gekennzeichnet, daß die Stützhülle aus warmformbaren verschweißbarem Polymerisat besteht.

11. Verfahren nach Anspruch 9 oder 10, dadurch gekennzeichnet, daß die Stützhülle aus Polyethylen besteht.

12. Verfahren nach einem der Ansprüche 9 bis 11, dadurch gekennzeichnet, daß man die Flanken der Folienfalten verschweißt.

13. Verfahren nach Anspruch 12, dadurch gekennzeichnet, daß man die Flanken der Folienfalten unter Ausbildung einer geraden schweißnaht miteinander verschweißt.

14. Verfahren nach Anspruch 13, dadurch gekennzeichnet, daß man die Folienflanken entlang einer geraden Linie verschweißt und die Folienflanken um die Schweißnaht als Klappachse auf die Stirnwände umlegt und mit diesen verschweißt.

**Revendications**

1. Unité fonctionnelle comprenant une gaine tubulaire (A) en forme de cylindre creux, réalisée en une seule pièce à partir d'une feuille postformable, et dotée d'une ouverture centrale (4) ménagée dans les parois frontales (2), ainsi qu'une tige creuse (B) réalisée à partir d'un boyau plissé dans le sens longitudinal et logé dans la cavité de la gaine tubulaire, à la suite de quoi la gaine tubulaire (A) enrobe la tige creuse (B) à l'exception de son ouverture frontale, caractérisée en ce que les parois frontales (2) portant les pliures indéformables présentent la forme d'une pyramide tronquée, sur laquelle les arêtes frontales (5) provoquées par les pliures se dirigent en direction du centre de la paroi frontale.

2. Unité fonctionelle selon la revendication 1, caractérisée en ce que chacune de ses parois frontales (2) comporte quatre arêtes frontales (5), indéformables et symétriques entre elles.

3. Unité fonctionelle selon l'une des revendications 1 ou 2, caractérisé en ce que la gaine tubulaire (A) est une gaine en polyéthylène.

4. Unité fonctionelle selon l'une des revendications 1 à 3, caractérisé en ce que les faces constituant une même pliure sont soudées entre elles.

5. Unité fonctionelle selon la revendication 4, caractérisée en ce que les faces constituant une même pliure sont soudées sur la totalité de leur surface.

6. Unité fonctionelle selon la revendication 4, caractérisée en ce que les faces constituant une même pliure sont soudées entre elles à la hauteur de l'arête frontale (5), le long d'une ligne droite, et y compris cette même arête frontale (5).

7. Unité fonctionelle selon la revendication 5, caractérisée en ce que les faces latérales des pliures sont reliées entre elles le long d'un cordon de soudure droit sur lequel se greffe une aile triangulaire à deux couches, dirigée vers l'extérieur, ouverte sur un côté (5.1), et présentant une arête de pliage (5) qui, avec le cordon de soudure, forme un angle déterminé.

8. Unité fonctionelle selon la revendication 7, caractérisée en ce que l'aile (5.1) greffée sur l'arête de pliage en forme de cordon de soudure (5) est rabattue autour de ce cordon de soudure, faisant fonction d'axe de rotation, pour se plaquer contre l'une surfaces frontales partielles (6), et y être maintenue par une soudure appropriée.

9. Procédé de fabrication de l'unité fonctionnelle selon l'une des revendications 1 à 8, qui consiste à enrober une tige creuse, sous forme d'un boyau plissé dans le sens longitudinal, d'un revêtement cylindrique réalisé à partir d'une feuille post-formable, et dimensionné de manière qu'il dépasse en longueur les deux extrémités de la tige creuse, et que les zones excédentaires puissent être transformées en parois frontales présentant une ouverture centrale, caractérisé en ce que, dans les zones excédentaires, on réalise au moins deux pliures, dont l'arête frontale de chacune d'entre elles est dirigée vers l'extérieur et subit finalement un traitement de résistance à la déformation

10. Procédé selon la revendication 9, caractérisé en ce que la gaine tubulaire est réalisée à partir d'un polymère thermoplastique et soudable.

11. Procédé selon l'une des revendications 9 ou 10, caractérisé en ce que la gaine tubulaire est en polyèthylène.

12. Procédé selon l'une des revendications 9 à 11, caractérisé en ce que les faces des pliures sont soudées entre elles.

13. Procédé selon la revendication 12, caractérisé en ce que les faces des pliures sont soudées entre elles de manière à ce qu'un cordon de soudure droit soit formé.

14. Procédé selon la revendication 13, caractérisé en ce que les faces des pliures sont sondées entre elles le long d'une ligne de soudure droite, puis rabattues autour de ce cordon de soudure, faisant fonction d'axe de rotation, pour se plaquer contre la surface frontale et y être maintenues par une soudure appropriée.

## Claims

1. Functional unit, comprising a one-piece hollow-cylindrical support sheath (A) of formable sheet material, with integral end walls (2) and a central opening (4) in these, and a hollow rod (B) of longitudinally shirred tubing in the hollow space of the support sheath, the support sheath (A) surrounding the hollow rod (B) whilst leaving the apertures leading into its hollow space free, characterized in that the end walls (2) are constructed in the shape of truncated pyramids, folds of sheet material of permanent shape thereby being formed, in such a manner that the end wall edges (5) formed during the fold formation are disposed radially with respect to the center of the end walls.

2. Functional unit according to Claim 1, characterized in that its end walls (2) are provided in each case with four end wall edges (5) of permanent shape, arranged symmetrically with respect to one another.

3. Functional unit according to Claim 1 or 2, characterized in that the support sheath (A) consists of polyethylene.

4. Functional unit according to any of Claims 1 to 3, characterized in that the sides associated in each case with the folds of sheet material are firmly joined to each other by being welded together.

5. Functional unit according to Claim 4, characterized in that the sides of the folds of sheet material are firmly joined to each other over their whole area by being welded together.

6. Functional unit according to Claim 4, characterized in that the sides of the folds of sheet material are firmly joined to each other in the area close to the end wall edges (5) along a straight line, and including the end wall edges (5), by being welded together.

7. Functional unit according to Claim 5, characterized in that the sides of the folds of sheet material are joined to each other along a straight welding seam which adjoins a triangular double-layered tail of sheet material (5.1), open to one side and pointing outward, with a folding edge (5) forming an angle with the welding seam.

8. Functional unit according to Claim 7, characterized in that the tail of sheet material, adjoining the folding edge (5) constructed as a welding seam, is folded onto one part-surface (6) of an end wall by folding it around the welding seam as a folding axis, and is firmly joined to the part-surface by welding.

9. Process for producing a functional unit according to any of Claims 1 to 8, in which, around a hollow rod of longitudinally shirred tubing, a cylindrical sheath of formable sheet material is arranged, the sheath being of such a length that it projects on both sides past the ends of the hollow rod and converts the projecting parts of the sheath into end walls with central openings, characterized in that at least two folds of sheet material are formed into the projecting parts of the sheath, the end edges of the folds pointing outward, and that their shape is then made permanent.

10. Process according to Claim 9, characterized in that the support sheath consists of a thermoplastic, weldable polymer.

11. Process according to Claim 9 or 10, characterized in that the support sheath consists of polyethylene.

12. Process according to any of Claims 9 to 11, characterized in that the sides of the folds of sheet material are welded together.

13. Process according to Claim 12, characterized in that the sides of the folds of sheet material are welded together, forming a straight welding seam.

14. Process according to Claim 13, characterized in that the sides of sheet material of the folds are welded together along a straight line, and that the sides of sheet material are folded onto the end walls around the welding seam as folding axis and are firmly joined to it by welding.